# EUROPEAN PATENT SPECIFICATION

(11) **EP 2 945 450 B1**
(45) Date of publication and mention of the grant of the patent: **28.06.2017**
(21) Application number: 15165810.1
(22) Date of filing: 29.04.2015
(51) Int. Cl.: H04W 88/02

(54) **WLAN DEVICE WITH PARALLEL WLAN RECEPTION USING AUXILIARY RECEIVER CHAIN**
WLAN-VORRICHTUNG MIT PARALLELEM WLAN-EMPFANG UNTER VERWENDUNG EINER HILFSEMPFÄNGERKETTE
DISPOSITIF WLAN DOTÉ D'UN MOYEN DE RÉCEPTION WLAN EN PARALLÈLE AVEC UNE CHAÎNE DE RÉCEPTION AUXILIAIRE

(30) Priority: 15.05.2014 US 201414278117; 14.09.2014 US 201414485735
(43) Date of publication of application: 18.11.2015
(73) Proprietor: Celeno Communications (Israel) Ltd., 43662 Ra'anana (IL)
(72) Inventor: Shapira, Nir, Raanana (IL)
(74) Representative: Beck Greener

(56) References cited:
- WO-A1-2006/105547
- US-A1- 2007 207 751

## Description

The present invention relates generally to wireless communication, and particularly to methods and systems for Wireless Local Area Network (WLAN) communication.

A Wireless Local-Area Network (WLAN) typically comprises one or more Access Points (APs) that communicate with stations (STAs). WLAN communication protocols are specified, for example, in the IEEE 802.11 family of standards, such as in the 802.11n-2009 standard entitled "IEEE Standard for Information technology - Local and metropolitan area networks - Specific requirements - Part 11: Wireless LAN Medium Access Control (MAC) and Physical Layer (PHY) Specifications Amendment 5: Enhancements for Higher Throughput," 2009; in the 802.11ac-2013 standard entitled "IEEE Standard for Information technology - Local and metropolitan area networks - Specific requirements - Part 11: Wireless LAN Medium Access Control (MAC) and Physical Layer (PHY) Specifications Amendment 4: Enhancements for Very High Throughput for Operation in Bands below 6 GHz," 2013; and in the IEEE 802.11 k-2008 standard entitled "IEEE Standard for Information technology - Telecommunications and information exchange between systems - Local and metropolitan area networks - Specific requirements; Part 11: Wireless LAN Medium Access Control (MAC) and Physical Layer (PHY) Specifications; Amendment 1: Radio Resource Measurement of Wireless LANs," 2008. WLANs are also commonly referred to as Wi-Fi networks.

WO-A-2006/105547 discloses a WLAN node including a first receive chain that maintains a WLAN association with a first access point and a second receive chain that is unassigned to participate in the WLAN association with the first access point. A correlator processor may carry out passive scanning for a second access point. The present invention is defined by virtue of the method and the apparatus of claims 1 and 15 respectively. Preferred embodiments are defined by the dependent claims. The present invention will be more fully understood from the following detailed description of the embodiments thereof, taken together with the drawings in which:
Fig. 1 is a block diagram that schematically illustrates a WLAN device, in accordance with an embodiment of the present invention; and

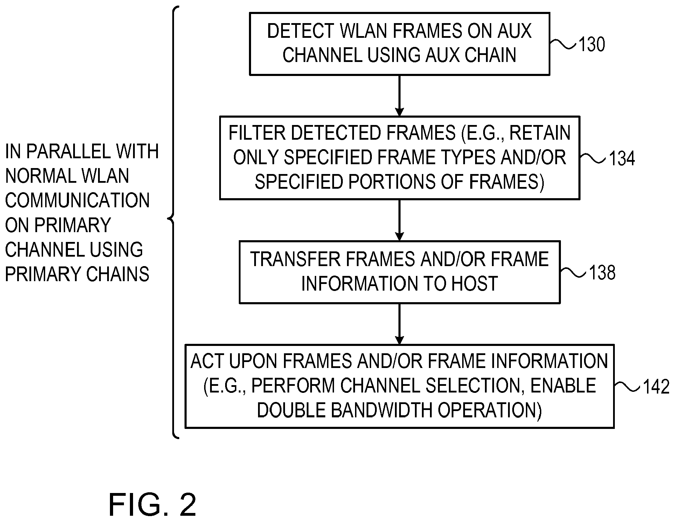

Fig. 2 is a flow chart that schematically illustrates a method for WLAN communication, in accordance with an embodiment of the present invention.

Embodiments of the present invention that are described herein provide improved methods and systems for WLAN communication. In the disclosed embodiments, a WLAN device (which may serve as an AP or STA) comprises one or more primary transmission/reception (TX/RX) chains for conducting WLAN communication with a remote WLAN device on a primary communication channel. In addition, the WLAN device comprises an auxiliary reception (RX) chain that is configured to receive WLAN communication on one or more other communication channels, referred to as auxiliary channels, in parallel with the normal communication conducted on the primary channel by the primary TX/RX chains.

In some embodiments, reception on the auxiliary RX chain is used for various activity mapping, sniffing and monitoring purposes. As such, in these embodiments the WLAN device applies only physical-layer (PHY) processing, and not Medium Access Control (MAC) processing, to WLAN frames received on the auxiliary channels. The WLAN device may use the output of the auxiliary RX chain, for example, as part of a channel selection process and/or for selective switching to a double-bandwidth communication mode. By using the auxiliary chain, the WLAN device is able to perform such tasks without disrupting normal communication on the primary channel.

Several example implementations of the auxiliary RX chain are described herein. Automatic Gain Control (AGC) design considerations and hardware commonality aspects are also addressed.

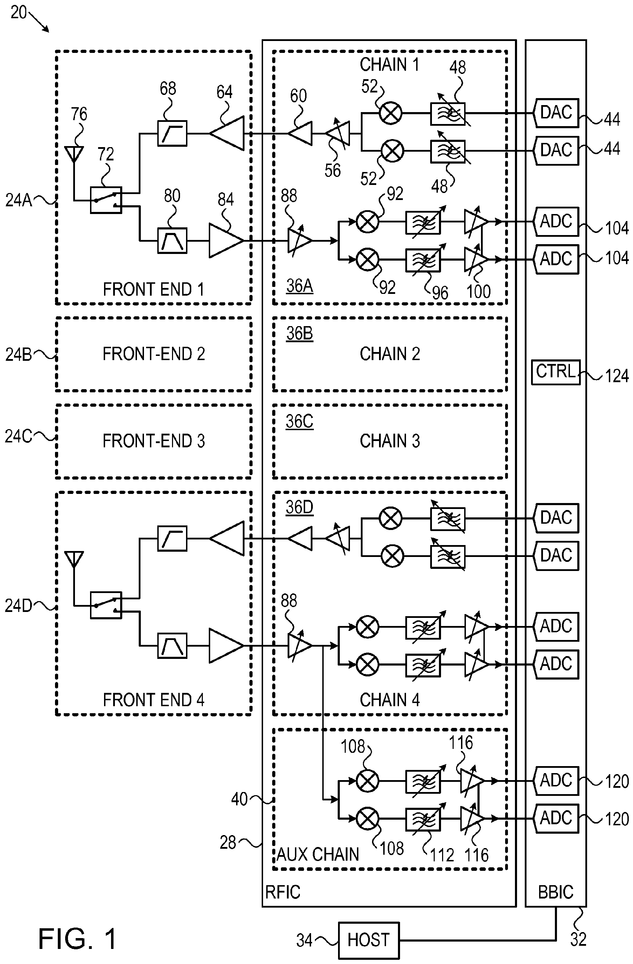

Fig. 1 is a block diagram that schematically illustrates a WLAN device 20, in accordance with an embodiment of the present invention. Device 20 may operate as a WLAN Access Point (AP) or as a WLAN station (STA). Device 20 is configured to communicate with remote WLAN devices in accordance with a WLAN standard such as the IEEE 802.11 standards, cited above.

In the present example, device 20 transmits and receives WLAN signals using four transmission/reception (TX/RX) chains, also referred to as primary chains. The four TX/RX chains comprise four respective front-ends 24A...24D and four respective Radio Frequency (RF) chains 36A...36D. RF chains 36A...36D are comprised in an RF Integrated Circuit (RFIC) 28. Baseband processing of the transmitted and received signals is performed in a Baseband Integrated Circuit (BBIC) 32. BBIC 32 also comprises a control unit 124, which controls and manages the operation of device 20. WLAN device 20 further comprises a host processor 34 (also referred to simply as host).

In each TX/RX chain, the transmit path begins in BBIC 32, which generates a digital baseband signal for transmission. A pair of Digital to Analog Converters (DACs) 44 convert the digital baseband signal into an analog signal. In the corresponding RF chain, a pair of Band-Pass Filters (BPFs) 48 filter the analog signal, a pair of mixers 52 up-convert the signal to RF, and amplifiers 56 and 60 amplify the RF signal. In the respective front-end, a Power Amplifier (PA) 64 amplifies the RF signal. The signal is then filtered with a Low-Pass Filter (LPF) 68, and provided via a TX/RX switch 72 to an antenna 76.

In the receive path of each TX/RX chain, antenna 76 receives an RF signal, and the signal passes through switch 72 and is filtered by a filter 80. A Low-Noise Amplifier (LNA) 84, referred to as an external LNA, amplifiers the signal before providing it to the corresponding RF chain in RFIC 28. In the RFIC, the signal is amplified by an additional LNA 88, referred to as an internal LNA. A pair of mixers 92 down-convert the RF signal to baseband, a pair of baseband filters 96 filter the down-converted signal, and the signal is then amplified by a pair of Variable-Gain Amplifiers (VGAs) 100. The baseband signal is then provided to BBIC 32, where it is converted into a digital signal by a pair of Analog-to-Digital Converters (ADCs) 104. The BBIC then proceeds to demodulate the digital signal. In a WLAN, the signal may comprise, for example, an Orthogonal Frequency Division Multiplexing (OFDM) signal.

The four TX/RX chains of device 20 are typically tuned to the same communication channel, so as to support various diversity or Multiple-Input Multiple-Output (MIMO) schemes. Thus, mixers 92 in the four RF chains 36A...36D are typically driven with the same Local Oscillator (LO) frequency. The channel frequency on which the four TX/RX chains communicate is denoted frequency A, and the corresponding LO signal is typically generated in a single synthesizer (or other frequency source, not shown in the figure).
In each TX/RX chain, LNA 88 and VGAs 100 have variable gains, which are typically controlled by control unit 124 as part of an Automatic Gain Control (AGC) mechanism. In an example implementation, the AGC mechanism may set the gains of LNA 88 and VGAs 100 such that LNA 84, LNA 88 and ADCs 104 do not saturate.

In addition to the four primary TX/RX chains, device 20 further comprises an auxiliary reception (RX) chain 40. Auxiliary chain 40 is typically used for receiving WLAN frames on an auxiliary channel, different from the primary channel used by the primary TX/RX chains. (Throughout the present patent application, the terms "channels," "frequency channels" and "communication channels" are used interchangeably.) The use of auxiliary chain 40 is addressed in greater detail below.

In the example of Fig. 1, auxiliary chain 40 shares the antenna, the front-end and also the internal LNA of one of the primary TX/RX chains. In other words, the input to auxiliary chain 40 is the RF signal produced by a receive amplifier (in the present example internal LNA 88) of one of the primary TX/RX chains. This receive amplifier is referred to herein as a common LNA. A quadrature mixer 108 down-converts the RF signal to baseband, a pair of baseband filters 112 filter the down-converted signal, and the signal is then amplified by a pair of Variable-Gain Amplifiers (VGAs) 116. The baseband signal of the auxiliary chain is provided to BBIC 32, where it is converted into a digital signal by a pair of Analog-to-Digital Converters (ADCs) 120.

Providing the input to the auxiliary chain from the output of a receive amplifier (e.g., LNA) of a primary chain is advantageous for several reasons. For example, since most of the RF hardware is shared between the primary and auxiliary chains, the added cost, size and power consumption incurred by the auxiliary chain is small. Moreover, the LNA output typically has a high impedance, which simplifies splitting of the signal. After the split, the signal is typically converted to current before downconversion in the mixers. Furthermore, since the splitting is performed after the LNA, the impact of the split on the sensitivity or noise figure of the primary chain is minimal, typically less than 1 dB. When the primary chain in question is one of several (e.g., four) primary chains, the impact of the split on the overall reception performance is typically negligible.

The frequency on which the primary TX/RX chains communicate is referred to as frequency A. The frequency on which the auxiliary chain receives at a given time is denoted frequency B. The corresponding LO signal, for driving mixers 108, is typically generated by an additional synthesizer (or other frequency source, different from the frequency source that drives mixers 92).

In some embodiments, the additional synthesizer used for the auxiliary chain may be designed for lower performance (and thus lower cost) than that of the synthesizer of the primary chains. Other components of the auxiliary chain, such as mixer 108 or analog front-end components, may also be designed with relaxed performance relative to the corresponding components in the primary chains.

In some embodiments, device 20 already comprises a second synthesizer for some other operating mode or purpose. In such an embodiment, the existing second synthesizer can be re-used for driving the auxiliary chain, further minimizing the added cost, size and power consumption.

The configuration of WLAN device 20 shown in Fig. 1 is an example configuration, which is chosen purely for the sake of conceptual clarity. In alternative embodiments, any other suitable device configuration can be used. For example, device 20 may comprise any suitable number of TX/RX chains, or even a single chain. The various reception and transmission paths in device 20 of Fig. 1 are implemented in an In-Phase/Quadrature (I/Q) configuration. Alternatively, some or all of the reception and/or transmission paths may be implemented using zero IF configuration with a single real BB signal.

The division of functions among the front-ends, RFIC, BBIC and host may differ from the division shown in Fig. 1. The RFIC and BBIC may be integrated in a single device (e.g., on a single silicon die) or implemented in separate devices (e.g., separate silicon dies). Further alternatively, the entire functionality of the front ends may be implemented in the RFIC, or device 20 may be implemented without an RFIC. In the front-ends, filter 80 may be inserted after LNA 84 rather than before the LNA. In other configurations filter 80 and/or LNA 84 may be omitted.

The different elements of device 20 may be implemented using suitable hardware, such as in one or more RFICs, Application-Specific Integrated Circuits (ASICs) or Field-Programmable Gate Arrays (FPGAs). In some embodiments, some elements of device 20, e.g., control unit 124 and/or host 34, can be implemented using software, or using a combination of hardware and software elements. Elements of device 20 that are not mandatory for understanding of the disclosed techniques have been omitted from the figure for the sake of clarity.

In some embodiments, control unit 124 and/or host 34 is implemented using a general-purpose processor, which is programmed in software to carry out the functions described herein. The software may be downloaded to the computer in electronic form, over a network, for example, or it may, alternatively or additionally, be provided and/or stored on non-transitory tangible media, such as magnetic, optical, or electronic memory.

In some embodiments, WLAN device 20 receives WLAN frames on the auxiliary channel using auxiliary RX chain 40, concurrently with the normal WLAN communication conducted by the primary TX/RX chains on the primary channel. Parallel reception of WLAN frames on the auxiliary channel can be used for various purposes, such as for mapping WLAN activity on various channels as part of a channel selection process. Such tasks can be carried out without disrupting communication on the primary channel.

Typically, the WLAN device applies only physical-layer (PHY) reception processing to the signals received by the auxiliary chain on the secondary channel. Medium Access Control (MAC) processing is typically performed only on the outputs of the primary TX/RX chains on the primary channel. Thus, in some embodiments, BBIC 32 transfers the WLAN frames received on the auxiliary channel, and/or information relating to these received frames, to host 34 or to any other processing circuitry.

In some embodiments, BBIC 32 filters the WLAN frames (i.e., selects only a subset of the WLAN frames) before transferring them to host 34. Additionally or alternatively, the BBIC may extract selected information from the received frames and pass the extracted information to the host. Such tasks may be performed, for example, by control unit 124. This technique is useful, for example, when the data throughput on the interface between BBIC 32 and host 34 is limited, and also helps to reduce computational load in the host.

The BBIC may filter the frames received on the auxiliary channel in various ways. For example, the BBIC may select and transfer to the host only frames of one or more selected types, e.g., only beacon frames, or only frames having one or more selected MAC addresses. The host may use frames filtered in this manner, for example, as part of a channel selection process: By analyzing received beacon frames, the host may count the number of APs active on the auxiliary channel. By analyzing MAC address and frame type information, the host may count the number of WLAN devices (APs and/or STAs) active on the auxiliary channel. These counts may be assessed on different auxiliary channels and used as channel selection criteria, possibly in combination with other factors.

In some embodiments, the BBIC removes at least part of the payload of each frame received on the auxiliary channel, before transferring the frames to the host. The BBIC may remove the entire payload and transfer only the frame header to the host, or limit the transferred payload size and transfer the frames with truncated payloads. In such embodiments, the outputs of the primary RX chains typically have priority over the output of the auxiliary chain on the BBIC-host interface.

In some embodiments, the BBIC does not transfer the frames themselves from the auxiliary channel to the host. Instead, the BBIC only detects the frames and transfers one or more attributes of the detected frames, e.g., the frame lengths.

As noted above, host 34 may use the output of the auxiliary RX chain (e.g., frames, parts of frames and/or frame attributes) for various monitoring, sniffing and analysis purposes. For example, the host may use the auxiliary chain output for channel selection, i.e., for selecting an alternative channel that will subsequently serve as the primary channel in case of a need for channel switch.

As another example, the host may use the auxiliary chain output for selecting a channel to serve for double-bandwidth communication together with the primary channel. In an operational mode denoted "80+80", for example, WLAN device 20 communicates simultaneously on two 80MHz channels. Typically, the WLAN device operates initially on only one of the channels, to support a wide variety of remote WLAN devices. In case a given remote WLAN device supports the "80+80" mode, device 20 may decide to switch to this mode. Switching to the "80+80" mode, however, is worthwhile only if the additional 80MHz channel is sufficiently clear. Otherwise, collisions on the additional channel will degrade performance. In such an embodiment, host 34 may check whether a certain auxiliary channel is relatively free of WLAN traffic and interference to justify operation in double-bandwidth mode together with the currently-used primary channel.

Further additionally or alternatively, host 34 may use the auxiliary chain output for selecting a channel for any other suitable purpose.

As noted above, in some embodiments control unit 124 carries out an Automatic Gain Control (AGC) process that controls the gains of LNAs 88 and VGAs 100 in the various primary chains depending on the received signal. In some embodiments, control unit 124 also controls the gains of VGAs 116 in auxiliary chain 40.
As can be seen in Fig. 1, some of the reception circuitry, and in particular LNA 88 of chain 36D, is common to primary RF chain 36D ("chain 4") and to auxiliary chain 40. In the description that follows, this LNA is referred to as the "common LNA." The gain setting of the common LNA affects the signal level in both chains, which may be sub-optimal for at least one of the chains. In some use cases the resulting performance degradation is small and tolerable. In some embodiments the control unit takes measures to reduce the degradation. In any case, the VGAs of the two chains (VGAs 96 in primary chain 36D and VGAs 116 in auxiliary chain 40) can still be set independently, and thus compensate for at least some of the sub-optimal LNA gain setting.

Typically, control unit 124 sets the gain of the common LNA based on the requirements of the primary chain, i.e., based on the signal received in primary chain 36D on frequency A. As a result, the gain of the auxiliary chain may be suboptimal. In many practical cases, however, the signal level in the auxiliary chain is still suitable for frame reception, especially since the control unit has separate control over VGAs 116.

The ability to receive frames on the auxiliary chain, notwithstanding the sub-optimal gain setting, may depend on the Modulation and Coding Scheme (MCS) used in that frame, i.e., high-order constellations may not be decodable, whereas low-order constellations (low MCSs) may be decoded successfully. Reception in the auxiliary chain may also be disrupted if the control unit changes the gain of the common LNA during frame reception, as part of the AGC process of the primary chain. Even in such a case, information relating to the beginning of the frame, e.g., the frame mode that is determined from the preamble, can still be determined and transferred to the host.

In yet another embodiment, if a signal is detected only in one of the two chains (on frequency A in chain 36D or on frequency B in chain 40), control unit 124 sets the gain of the common LNA based on that signal. This mechanism is particularly suitable for intermittent or packetized protocols such as IEEE 802.11 WLAN.

In still another embodiment, the control unit may set the gain of the common LNA while considering the requirements of both chains, e.g., set the LNA to some average of the gain requirements of the two chains. Further alternatively, control unit 124 may control the gain of the common LNA in any other suitable way.

In some embodiments, the primary chain notifies the auxiliary chain of each gain change applied to the common LNA. The auxiliary chain aims to maintain a target overall gain (which may be configurable, and may have different optimal settings for radar detection and for activity monitoring). Upon receiving a notification, the auxiliary chain attempts to compensate for the LNA gain change by changing the gain of VGAs 116, such that the target overall gain is maintained of the auxiliary chain.

Additionally, a "VALID" signal may be sent from the primary chain to the auxiliary chain. The VALID signal is de-asserted after the gain of the common LNA is changed, and re-asserted when the gain change settles. When the VALID signal is de-asserted, auxiliary chain operation is paused, to prevent false detection due to gain instability effects.

In some embodiments, certain circuitry, such as some of the processing circuitry in BBIC 32, is shared by the fourth primary chain and by auxiliary chain 40. The shared circuitry may comprise, for example, circuitry for frame detection or other baseband processing circuitry, and/or AGC circuitry that controls the gain of common LNA 88. In an example embodiment, the shared circuitry is connected to the fourth primary chain and to the auxiliary chain through a multiplexer, which is controlled by control unit 124. The control unit may use various criteria for deciding when to assign the shared circuitry to which chain.

Typically, priority in assignment of the shared circuitry is given to the fourth primary chain, and the control unit assigns the circuitry to the auxiliary chain only if the fourth primary chain has no signal to process. In one embodiments, if a signal appears in the fourth primary chain while the shared circuitry is processing a signal for the auxiliary chain, control unit 124 aborts the processing and immediately assigns the shared circuitry to the fourth primary chain (and accordingly controls the gain of LNA 88 according to the signal received in the fourth primary chain). In this embodiment, partial information from the auxiliary chain can still be transferred to the host.

In another embodiment, the control unit waits until processing for the auxiliary chain is completed, and only then assigns the shared circuitry to the fourth primary chain. In yet another embodiment, if signals are present in the fourth primary chain and in the auxiliary chain, control unit 124 continues to receive the frame on channel B the auxiliary chain, and in parallel continues to receive the frame on channel A using the primary chains other than the fourth primary chains.

Typically, WLAN devices transmit beacon frames in sequences having a periodic pattern. In some embodiments, control unit 124 detects beacon frames on various auxiliary channel frequencies and identifies the periodic patterns (e.g., period interval and timing) of the various beacon sequences. In some embodiments, control unit 124 uses this information to tune the auxiliary channel so as to hop among multiple auxiliary channel frequencies, according to the identified patterns. In this manner, the control unit can efficiently capture beacon frames of multiple WLAN devices on multiple different frequencies simultaneously.

In some embodiments, when the shared baseband circuitry is assigned to the auxiliary RX chain, control unit 124 deactivates at least part of the fourth primary chain in order to reduce power consumption. In one embodiment all other primary chains are deactivated, as well. In another embodiments, the remaining three primary chains remain active, and continue normal communication without the fourth chain, possibly at reduced performance.

In some embodiments, when one or more of the primary chains are transmitting, control unit 124 deactivates auxiliary chain 40, or at least stops processing the signal produced by the auxiliary chain. The rationale behind this mechanism is that transmission from the nearby primary chains is likely to saturate or otherwise distort reception in the auxiliary chain.

In some embodiments, when one or more of the primary chains are transmitting, control unit 124 retains auxiliary chain 40 active, and controls the gain of the common LNA (LNA 88) based on the signal level in the auxiliary chain. When the auxiliary chain is active in parallel with primary chain transmission, in some cases the LNA gain control is limited in range so as not to saturate the LNA, and/or to limit cross-modulation between the leakage from the transmitted signal and the received signal in the auxiliary chain. The effects of transmitted signal leakage can be calibrated per WLAN device to determine the LNA gain control limits.

It will be appreciated that the embodiments described above are cited by way of example, and that the present invention is not limited to what has been particularly shown and described hereinabove. Rather, combinations and sub-combinations of the various features described hereinabove, as well as variations and modifications thereof which would occur to persons skilled in the art upon reading the foregoing description and which are not disclosed in the prior art, may be made to the examples described within the scope of the appending claims.

## Claims

1. A method, comprising:
in a Wireless Local Area Network, WLAN, device (20), communicating on a first communication channel using one or more primary transmission/reception, TX/RX, chains (36A...36D);
concurrently with communicating on the first communication channel using the primary TX/RX chains, receiving WLAN communication on one or more second communication channels using an auxiliary reception, RX, chain (40) whose input signal is provided from an output of a receive amplifier (88) having a variable-gain in one of the primary TX/RX chains; and
setting the variable gain of the receive amplifier based either on a first level of a first signal received via the one of the primary TX/RX chains, or based on a second level of a second signal received via the auxiliary RX chain.

2. The method according to claim 1, wherein receiving the WLAN communication comprises receiving WLAN frames, and transferring the received WLAN frames to a host (34).

3. The method according to claim 2, and comprising selecting only a subset of the WLAN frames received on the second communication channels, and transferring only the selected subset of the WLAN frames to the host (34).

4. The method according to claim 2, and comprising removing, at least partially, payloads of the WLAN frames received on the auxiliary channel, before transferring the WLAN frames to the host (34).

5. The method according to any of the preceding claims, wherein receiving the WLAN communication comprises detecting WLAN frames, and transferring one or more attributes of the detected WLAN frames to a host (34).

6. The method according to any of the preceding claims, and comprising selecting a channel, for subsequently serving as the first communication channel by the primary TX/RX chains (36A...36D), by analyzing the WLAN communication received on the second communication channels.

7. The method according to any of the preceding claims, and comprising selecting a channel for performing double-bandwidth communication, by analyzing the WLAN communication received on the second communication channels.

8. The method according to any of the preceding claims, and comprising, in response to detecting a signal in only one of the auxiliary RX chain (40) and the primary TX/RX chain (36D), setting the variable gain of the receive amplifier (88) based on the detected signal.

9. The method according to any of the preceding claims, and comprising setting the variable gain of the receive amplifier (88) based on a signal received in the primary TX/RX chain (36D).

10. The method according to claim 9, and comprising modifying the variable gain of the receive amplifier (88) based on a signal received in the primary TX/RX chain (36D), and compensating for the modified gain by adjusting a variable-gain element in the auxiliary RX chain (40).

11. The method according to any of the preceding claims, and comprising assigning circuitry alternately between the auxiliary RX chain (40) and a primary TX/RX chain (36D), designated from among the primary TX/RX chains (36A...36D).

12. The method according to any of the preceding claims, wherein receiving the WLAN communication comprises identifying periodic patterns of sequences of beacon frames transmitted on multiple second communication channels, and receiving the beacon frames by tuning the auxiliary RX chain (40) alternately among the second communication channels in accordance with the identified periodic patterns.

13. The method according to any of the preceding claims, and comprising deactivating the auxiliary RX chain (40) while one or more of the primary TX/RX chains (36A...36D) are in a transmission mode.

14. The method according to any of the preceding claims, and comprising, when one or more of the primary TX/RX chains (36A...36D) are in a transmission mode, continuing to receive WLAN communication using the auxiliary RX chain (40) while limiting a permitted gain of the auxiliary RX chain.

15. A Wireless Local Area Network, WLAN, device (20), comprising:
one or more primary transmission/reception, TX/RX, chains (36A...36D), which are configured to communicate on a first communication channel;
an auxiliary reception, RX, chain (40), which is configured to accept an input signal from an output of a receive amplifier (88) having a variable gain in one of the primary TX/RX chains (36A...36D), and to receive in the input signal WLAN communication on one or more second communication channels concurrently with communication of the primary TX/RX chains (36A...36D) on the first communication channel; and
a control unit (124), which is configured to set the variable gain of the receive amplifier based either on a first level of a first signal received via the one of the primary TX/RX chains, or based on a second level of a second signal received via the auxiliary RX chain.

## Patentansprüche

1. Verfahren, das Folgendes umfasst:
eine Vorrichtung (20) in einem drahtlosen lokalen Netz, WLAN, die auf einem ersten Kommunikationskanal unter Verwendung einer oder mehrerer primärer Übertragungs-/Empfangsketten, TX/RX-Ketten, (36A...36D) kommuniziert;
die gleichzeitig mit dem Kommunizieren auf dem ersten Kommunikationskanal unter Verwendung der primären TX/RX-Ketten eine WLAN-Kommunikation auf einem oder mehreren zweiten Kommunikationskanälen unter Verwendung einer Hilfsempfangskette, RX-Kette, (40) empfängt, deren Eingabesignal von einer Ausgabe eines Empfangsverstärkers (88) mit einer regelbaren Verstärkung in einer der primären TX/RX-Ketten bereitgestellt wird; und
Einstellen der regelbaren Verstärkung des Empfangsverstärkers entweder basierend auf einem ersten Pegel eines ersten Signals, das mittels der einen der primären TX/RX-Ketten empfangen wird, oder basierend auf einem zweiten Pegel eines zweiten Signals, das mittels der Hilfs-RX-Kette empfangen wird.

2. Verfahren nach Anspruch 1, wobei das Empfängen der WLAN-Kommunikation Empfangen von WLAN-Rahmen und Übertragen der empfangenen WLAN-Rahmens an einen Host (34) umfasst.

3. Verfahren nach Anspruch 2, und welches Auswählen nur einer Untermenge der WLAN-Rahmen, die auf den zweiten Kommunikationskanälen empfangen werden, und Übertragen nur der ausgewählten Untermenge der WLAN-Rahmen an den Host (34) umfasst.

4. Verfahren nach Anspruch 2, und welches mindestens teilweises Entfernen von Nutzlasten der WLAN-Rahmen, die auf dem Hilfskanal empfangen werden, vor dem Übertragen der WLAN-Rahmen an den Host (34) umfasst.

5. Verfahren nach einem der vorhergehenden Ansprüche, wobei das Empfangen der WLAN-Kommunikation Detektieren von WLAN-Rahmen und Übertragen eines oder mehrerer Attribute der detektierten WLAN-Rahmen an einen Host (34) umfasst.

6. Verfahren nach einem der vorhergehenden Ansprüche, und welches Auswählen eines Kanals, der anschließend als der erste Kommunikationskanal durch die primären TX/RX-Ketten (36A...36D) dienen soll, durch Analysieren der WLAN-Kommunikation, die auf den zweiten Kommunikationskanälen empfangen wird, umfasst.

7. Verfahren nach einem der vorhergehenden Ansprüche, und welches Auswählen eines Kanals zum Durchführen einer Doppelbandbreiten-Kommunikation durch Analysieren der WLAN-Kommunikation, die auf den zweiten Kommunikationskanälen empfangen wird, umfasst.

8. Verfahren nach einem der vorhergehenden Ansprüche, und welches als Antwort auf das Detektieren eines Signals in nur einer der Hilfs-RX-Kette (40) und der primären TX/RX-Kette (36D) Einstellen der regelbaren Verstärkung des Empfangsverstärkers (88) basierend auf dem detektierten Signal umfasst.

9. Verfahren nach einem der vorhergehenden Ansprüche, und welches Einstellen der regelbaren Verstärkung des Empfangsverstärkers (88) basierend auf einem Signal, das in der primären TX/RX-Kette (36D) empfangen wird, umfasst.

10. Verfahren nach Anspruch 9, und welches Modifizieren der regelbaren Verstärkung des Empfangsverstärkers (88) basierend auf einem Signal, das in der primären TX/RX-Kette (36D) empfangen wird, und Kompensieren der modifizierten Verstärkung durch Anpassen eines regelbaren Verstärkungselements in der Hilfs-RX-Kette (40) umfasst.

11. Verfahren nach einem der vorhergehenden Ansprüche, und welches abwechselndes Zuweisen einer Schaltung zwischen der Hilfs-RX-Kette (40) und einer primären TX/RX-Kette (36D), die unter den primären TX/RX-Ketten (36A...36D) bestimmt wird, umfasst.

12. Verfahren nach einem der vorhergehenden Ansprüche, wobei das Empfangen der WLAN-Kommunikation Identifizieren periodischer Muster von Sequenzen von Bakenrahmen, die auf mehreren zweiten Kommunikationskanälen übertragen werden, und Empfangen der Bakenrahmen durch abwechselndes Abstimmen der Hilfs-RX-Kette (40) unter den zweiten Kommunikationskanälen in Übereinstimmung mit den identifizierten periodischen Mustern umfasst.

13. Verfahren nach einem der vorhergehenden Ansprüche, und welches Deaktivieren der Hilfs-RX-Kette (40), während sich eine oder mehrere der primären TX/RX-Ketten (36A...36D) in einem Übertragungsmodus befinden, umfasst.

14. Verfahren nach einem der vorhergehenden Ansprüche, und welches, wenn sich eine oder mehrere TX/RX-Ketten (36A...36D) in einem Übertragungsmodus befinden, weiteres Empfangen von WLAN-Kommunikation unter Verwendung der Hilfs-RX-Kette (40) während des Beschränkens einer erlaubten Verstärkung der Hilfs-RX-Kette umfasst.

15. Drahtlose lokale Netzvorrichtung, WLAN-Vorrichtung, (20), die Folgendes umfasst:
eine oder mehrere primäre Übertragungs-/Empfangsketten, TX/RX-Ketten, (36A...36D), die konfiguriert sind, um auf einem ersten Kommunikationskanal zu kommunizieren;
eine Hilfsempfangskette, RX-Kette (40), die konfiguriert ist, um ein Eingabesignal von einer Ausgabe eines Empfangsverstärkers (88) mit einer regelbaren Verstärkung in einer der primären TX/RX-Ketten (36A...36D) anzunehmen und im Eingabesignal eine WLAN-Kommunikation auf einem oder mehreren zweiten Kommunikationskanälen gleichzeitig mit der Kommunikation den primären TX/RX-Ketten (36A...36D) auf dem ersten Kommunikationskanal zu empfangen; und
eine Steuereinheit (124), die konfiguriert ist, eine regelbare Verstärkung des Empfangsverstärkers entweder basierend auf einem ersten Pegel eines ersten Signals, das mittels der einen der primären TX/RX-Ketten empfangen wird, oder basierend auf einem zweiten Pegel eines zweiten Signals, das mittels der Hilfs-RX-Kette empfangen wird, einzustellen.

## Revendications

1. Méthode comprenant :
dans un réseau local sans fil, WLAN, un dispositif (20) communiquant sur un premier canal de communication à l'aide d'une ou plusieurs chaînes d'émission / réception primaires, TX/RX, (36A...36D) ;
conjointement avec la communication sur le premier canal de communication à l'aide des chaînes TX/RX primaires, réception de communications WLAN sur un ou plusieurs des canaux de communication à l'aide d'une chaîne de réception (RX) auxiliaire (40), dont le signal d'entrée provient d'une sortie d'un amplificateur de réception (88) présentant un gain variable dans une des chaînes TX/RX primaires ; et
l'établissement du gain variable de l'amplificateur de réception sur la base soit d'un premier niveau d'un premier signal reçu à travers une des chaînes TX/RX primaires, soit d'un deuxième niveau d'un deuxième signal reçu à travers la chaîne RX auxiliaire.

2. Méthode selon la revendication 1, la réception des communications WLAN comprenant la réception de séquences WLAN, et le transfert des séquences WLAN reçues à un hôte (34).

3. Méthode selon la revendication 2, comprenant la sélection seulement d'un sous-ensemble de séquences WLAN reçues sur les deuxièmes canaux de communication, puis le transfert à l'hôte (34) seulement du sous-ensemble sélectionné des séquences WLAN.

4. Méthode selon la revendication 2, comprenant la suppression, au moins partielle, des charges utiles des séquences WLAN reçues sur le canal auxiliaire, avant le transfert des séquences WLAN à l'hôte (34).

5. Méthode selon une quelconque des revendications précédentes, la réception de la communication WLAN comprenant la détection de séquences WLAN, et le transfert d'un ou plusieurs attributs des séquences WLAN détectées à un hôte (34).

6. Méthode selon une quelconque des revendications précédentes, comprenant la sélection d'un canal qui servira par la suite de premier canal de communication par les chaînes TX/RX primaires (36A...36D), en analysant les communications WLAN reçues sur les deuxièmes canaux de communication.

7. Méthode selon une quelconque des revendications précédentes, comprenant la sélection d'un canal pour l'exécution de communication à double largeur de bande, en analysant les communications WLAN reçues sur les deuxièmes canaux de communication.

8. Méthode selon une quelconque des revendications précédentes, comprenant, en réponse à la détection d'un signal dans un seul de la chaîne de réception (RX) auxiliaire (40) et de la chaîne TX/RX primaire (36D), le réglage du gain variable de l'amplificateur de réception (88) sur la base d'un signal détecté.

9. Méthode selon une quelconque des revendications précédentes, comprenant le réglage du gain variable de l'amplificateur de réception (88) sur la base d'un signal reçu dans la chaîne TX/RX primaire (36D).

10. Méthode selon la revendication 9, comprenant la modification du gain variable de l'amplificateur de réception (88) sur la base d'un signal reçu dans la chaîne TX/RX primaire (36D), et compensant le gain modifié en ajustant un élément à gain variable dans la chaîne (RX) auxiliaire (40).

11. Méthode selon une quelconque des revendications précédentes, comprenant l'affectation de circuits en alternance entre la chaîne (RX) auxiliaire (40) et une première chaîne TX/RX primaire (36D), désignée parmi les chaînes TX/RX primaires (36A...36D).

12. Méthode selon une quelconque des revendications précédentes, la réception de communications WLAN comprenant l'identification de configurations périodiques de séquences de trames balise transmises sur de multiples deuxièmes canaux de communication, et la réception de séquences de trames balise en alternant l'accord de la chaîne de réception (RX) auxiliaire (40) entre les deuxièmes canaux de communication en accord avec les configurations périodiques identifiées.

13. Méthode selon une quelconque des revendications précédentes, comprenant la désactivation de la chaîne de réception (RX) auxiliaire (40) alors qu'une ou plusieurs chaînes TX/RX primaires (36A...36D) se trouvent en mode de transmission.

14. Méthode selon une quelconque des revendications précédentes, comprenant, lorsqu'une ou plusieurs des chaînes TX/RX primaires (36A...36D) se trouvent en mode de transmission, le maintien de la réception de communications WLAN utilisant la chaîne (RX) auxiliaire (40) tout en limitant un gain permis de la chaîne RX auxiliaire.

15. Dispositif de réseau local sans fil WLAN (20) comprenant :
une ou plusieurs chaînes d'émission / réception primaires (36A...36D) configurées pour communiquer sur un premier canal de communication ;
une chaîne de réception (RX) auxiliaire (40), configurée pour accepter un signal d'entrée d'une sortie d'un amplificateur de réception (88) présentant un gain variable dans une des chaînes TX/RX primaires (36A...36D), et recevoir dans le signal d'entrée la communication WLAN sur un ou plusieurs canaux de communication conjointement avec la communication des chaînes TX/RX primaires (36A...36D) sur le premier canal de communication ; et
un régulateur (124) configuré pour régler le gain variable de l'amplificateur de réception sur la base soit d'un premier niveau d'un premier signal reçu par le biais de celle des chaînes TX/RX primaires, soit d'un deuxième niveau d'un deuxième signal reçu à travers la chaîne RX auxiliaire.
